Europäisches Patentamt

**European Patent Office**

**Office européen des brevets**

(11) Numéro de publication: **0 172 077**

**A1**

(12) **DEMANDE DE BREVET EUROPEEN**

(21) Numéro de dépôt: **85401451.1**

(22) Date de dépôt: **15.07.85**

(51) Int. Cl.⁴: **A 01 G 13/02**
**A 01 C 7/08**

(30) Priorité: **16.07.84 FR 8411332**
**26.02.85 FR 8502888**

(43) Date de publication de la demande:
**19.02.86 Bulletin 86/8**

(84) Etats contractants désignés:
**AT BE DE GB NL**

(71) Demandeur: **Le Goff, Joseph**
**Moustoir-Remungol**
**F-56500 Locmine(FR)**

(72) Inventeur: **Le Goff, Joseph**
**Moustoir-Remungol**
**F-56500 Locmine(FR)**

(74) Mandataire: **Harlé, Robert et al,**
**c/o Cabinet Harlé & Phélip 21, rue de la Rochefoucauld**
**F-75009 Paris(FR)**

(54) **Procédé de terrage du film d'un semoir sous paillage, dispositif dérouleur coupe-film pour un tel semoir, et semoir de ce type.**

(57) Le dispositif comprend un rouleau dérouleur (2) en contact par sa périphérie aval avec une plaque (26) concentrique maintenue élastiquement par deux bras pivotés sur des bouts d'arbre (1') d'un cylindre tasseur. L'organe de coupe (4) est un cadre rectangulaire (27) dont le côté inférieur porte une lame et coupe (4") et dont le côte supérieur est relié à un vérin (4') fixé au châssis du semoir. Un rouleau (30) à déflecteurs (32) est monté fou entre deux bras (31) fixés à l'organe de coupe pour descendre avec lui. Les éléments semeurs et/ou tasseurs, dérouleurs et le système de coupe sont relevés et abaissés simultanément.

EP 0 172 077 A1

./...

FIG. 3

L'invention concerne des perfectionnements aux semoirs de graines sous paillage, notamment aux dispositifs dérouleurs et coupe-film, ainsi qu'au terrage du film en bout de rang de semage.
Les semoirs sous paillage, dénommés plastisemeuses,
sont souvent munies d'un coupe-film actionné en
bout de rang ensemencé, la coupe libre du film posé,
comme celle qui débutera le rang suivant après demi-
tour du semoir, sont libres ou laissées libres et
le film n'est ainsi pas maintenu sur le sol par ses
bords terrés ou recouverts à la hâte et manuellement
d'un peu de terre pour leur maintien au sol. Le terrage est obligatoire et peu commode notamment pour
le début du second rang, en particulier en cas de
vent parce que le film libre flotte en l'air et est
difficile à maintenir pour être correctement placé
sur le sol. Certaines des plastisemeuses connues
sont constituées par un châssis portant des cylindres ou rouleaux respectivement tasseur, dérouleur-
applicateur du film, ainsi que des roues semeuses
relevables à godets-picots ouvrables et des trémies
d'alimentation de distributeurs de graines. On a déjà proposé, pour éviter après la coupe le "flottement" de l'extrémité du film non posé, de munir le
rouleau dérouleur de sabots reposant sur les bords
dudit rouleau, mais cette disposition reste pratiquement sans effet.

En revoyant en détail le processus du semage sous paillage, on a constaté que, dans les semoirs à coupe-film connus, l'extrémité libérée par
la coupe en fin d'un rang précédent avait tendance
à remonter le long du rouleau dérouleur-applicateur;
on en a conclu que si ce phénomène pouvait être dominé par des moyens -simples de préférence-, la question du maintien du film sur le sol en fin et en début de rang serait résolue efficacement, entraînant une bien meilleure rentabilité du semage. On a eu alors l'idée d'utiliser l'organe coupe-film pour le terrage en bout de rang semé et paillé et en début du rang voisin à semer et à pailler, du film respectivement posé et à poser.

Le premier objet de l'invention est donc un procédé pour le terrage des extrémités et bords coupés du film en fin et en début de rang avec une plastisemeuse du type précisé ci-dessus; un autre objet de l'invention concerne un dispositif pour la mise en oeuvre de ce procédé.

Le procédé de terrage en bout selon l'invention consiste essentiellement à assurer un contact étroit du film sur la périphérie aval du dérouleur-applicateur, à empêcher du côté amont le film et la terre de remonter sur la surface amont du dérouleur, à associer la lame ou scie, rectiligne, de coupe avec des moyens de retenue et d'étalage de la terre, à régler la commande de l'organe de coupe de manière à lui permettre de venir en contact actif avec la terre, à coordonner pour certains déplacements du semoir, la position basse de l'organe de coupe avec le relevage des éléments semeurs pendant ces déplacements de courte longueur, vers l'aval ou l'amont, de manière que la terre poussée par l'organe de coupe et les moyens de retenue et d'étalage amènent la terre qu'ils entraînent à se placer sur l'extrémité du film en bout du rang paillé ou à pailler. En plus de ce procédé de terrage et des dispositions pour le mettre en oeuvre, l'invention concerne également un certain nombre de caractéristiques permettant d'alléger le semoir et de faciliter sa manoeuvre, en diminuant tant les frais de fabrication que d'entretien et d'utilisation.

D'une manière générale, un dispositif de dérouleur-coupe-film selon l'invention, adaptable sur divers types de plastisemeuses, est caractérisé par le fait que sur le châssis de la machine sont montés d'une part un cylindre portant le rouleau du film à dérouler, d'autre part un cylindre pratiquement tangent à l'une des génératrices du cylindre portant le film et appliquant ledit film sur le sol en agissant comme rouleau plombeur et enfin que ce dernier rouleau dérouleur porte à chaque extrémité de son axe un bras pivotant librement autour de celui-ci, une lame de scie étant disposée à articulation entre les secondes extrémités de ces bras, des moyens tels qu'un vérin porté par le châssis étant prévus pour maintenir la scie éloignée du film ou pour l'appliquer contre le film pour sa coupe, un élément élastique agissant sur lesdits moyens pour éviter l'effet importun d'obstacles du sol sur la coupe régulière du film en bout de rang, des moyens agissant en tout cas pendant la coupe pour empêcher toute prise de position gênante par le film, c'est-à-dire pour l'empêcher de flotter librement.

Les moyens de maintien du film non déposé à la coupe peuvent être constitués par des buses, deux au moins, de soufflage d'air alimentées à partir du ventilateur utilisé pour le distributeur de graines et disposées au voisinage du sol en avant du cylindre dérouleur-applicateur, de manière à appliquer le film contre le rouleau; le soufflage est avantageusement appliqué pendant tout le travail de la plastisemeuse, mais il pourrait n'agir que pendant la coupe c'est-à-dire en bout de rang.

Les moyens de maintien du film peuvent avantageusement se caractériser en ce que le rouleau dérouleur a une grande partie de sa périphérie aval en contact très proche avec une plaque concentrique à lui et maintenue élastiquement contre lui à partir du rouleau tasseur, que l'organe de coupe est en forme de cadre rectangulaire dont le milieu du côté supérieur est actionné par un vérin de corps élastiquement fixé au châssis du semoir, que deux bras pivotés autour de chaque extrémité de l'arbre dérouleur portent entre leurs autres extrémités un rouleau tournant fou et reliés au cadre de coupe dont ils suivent les mouvements.

On a décrit ci-après des exemples de réalisation de la présente invention en se référant aux dessins annexés dans lesquels :

Fig. 1 est une vue en perspective du dispositif monté sur une plastisemeuse dont seuls deux éléments du châssis avant sont représentés;

Fig. 2 représente un dispositif de soufflage combiné avec le coupe-film.

Fig. 3 est une vue en élévation longitudinale d'un tel semoir;

Fig. 4 est une vue par dessus dudit semoir à quatre rangs;

Fig. 5 est une vue de l'avant du même semoir;

Fig. 6 représente schématiquement l'ensemble des cylindres, du dispositif de coupe et de son rouleau annexe.

Fig. 7 est une roue à godets picots avec son cadre et son dispositif d'ouverture-fermeture des picots, vue de côté.

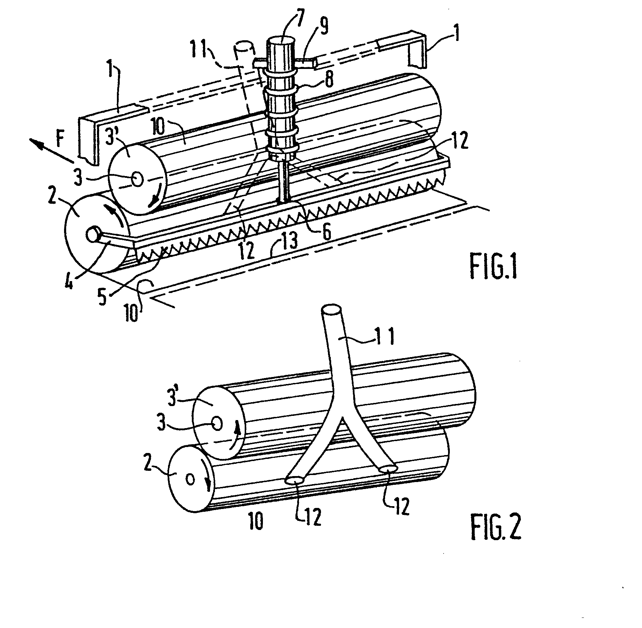

Sur le châssis 1 sont montés (Figure 1) par tous moyens connus un cylindre 3 sur lequel est emmanchée la bobine 3' de film; le cylindre dérouleur-applicateur 2 est monté parallèle à la bobine 3' et sensiblement tangent à une des génératrices inférieures de celle-ci. A chaque extrémité du cylindre 2 est fixée à pivotement l'une des extrémités de bras 4 entre les autres extrémités desquels est fixée une scie 5, par exemple du type des scies de faucheuses; vers le milieu de la scie 5 est articulée la tête 6 mobile d'un vérin 7 fixé sur le châssis 1; le corps du vérin 7 comporte un ressort à boudins 8 entourant le vérin et qui se comprime contre une bague 9 lorsqu'une action exercée sur la scie est transmise au vérin, par exemple sous l'effet d'un caillou ou autre soulevant une zone du film 10 en bout de rang. On voit que, dans ces conditions, le vérin 7 en extension pour amener la scie 5 contre le film 10 pour le couper, est légèrement soulevé ce qui fait "passer" l'obstacle par la scie 5 et applique immédiatement par elle le film 10 totalement sur le sol en assurant la coupe régulière requise.

A la figure 2 on voit le dispositif souffleur de maintien du film 10 restant à dérouler pour la reprise de rang. A partir du ventilateur général (dans le cas de distributeur pneumatique) ou d'un ventilateur indépendant dans les autres cas, non représenté, une tuyauterie 11 amène de l'air soufflé dans deux buses 12 (ou davantage) réparties régulièrement par rapport à la largeur du film 10; ces buses sont disposées entre le niveau inférieur du cylindre dérouleur 3 et le sol, en étant orientées pour que les jets respectifs sortant appliquent le film contre la surface du cylindre 3 après la ligne de coupe 13 tracée par la scie 5.

Le fonctionnement du dispositif est le suivant : lorsque, en roulant dans le sens de la flèche F, on arrive en bout de rang, le conducteur doit relever la machine; à ce mouvement correspond la commande du vérin 7 qui pousse la scie 5 par la tête 6 pour l'appliquer contre le film 10; si le sol est normal, la pression de la scie 5 provoque la coupure du film suivant la ligne 13, le vent sortant des buses 12 appliquant la partie pendante du film, après découpe, vers l'arrière, contre la surface du cylindre plombeur 3, et permet donc son déroulement facile lors du début de pose sur le rang suivant. Dans le cas où le semage n'est pas pneumatique, il y a intérêt à équiper le semoir plastisemeur avec un ventilateur particulier afin d'assurer ainsi le "contrôle" du film à la coupe.

Le semoir représenté est du type connu comportant un ensemble (cylindres tasseur 1, porte film 3, dérouleur applicateur 2 de film, dispositif de coupe film 4 à vérin) porté sur un châssis accrochable par un dispositif "trois points" 5 à un tracteur d'une part et prolongé par une partie "semoir à picots", qui sera désigné comme "ensemble semeur" 6, avec distributeur 7 entraîné synchroniquement avec la rotation des picots ouvrables 8 et monté à l'intérieur de la roue semeuse 9, les graines étant amenées directement du distributeur dans le fond ouvert des godets-picots dont les becs s'ouvrent et se ferment au moyen d'un galet roulant sur une came disposée fixe en un arc symétrique par rapport à la verticale du point de semage et sensiblement parallèle au cercle tangent au fond des godets prêts à, ou venant de semer une graine.

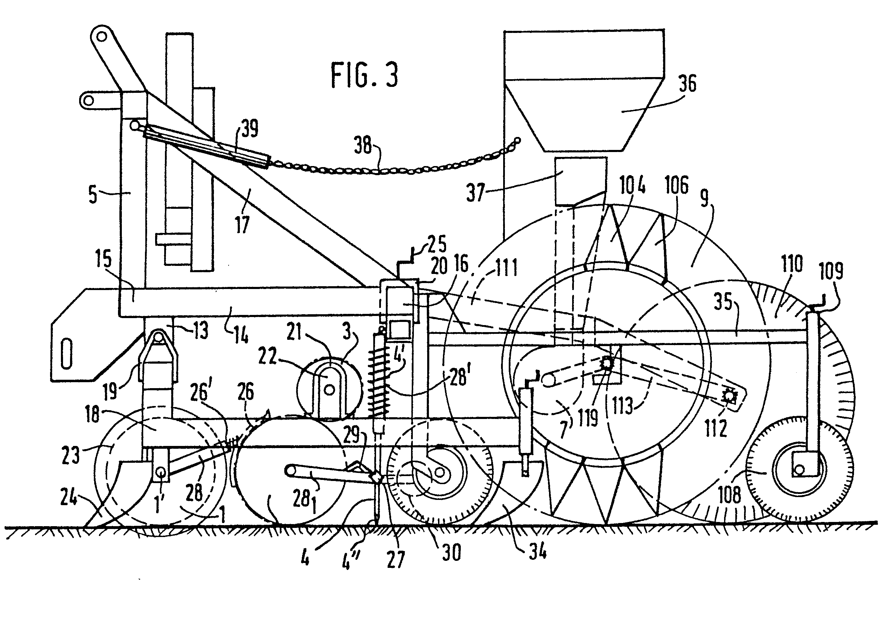

Le semoir comporte en général quatre ou six rangs de paillage, quatre dans l'exemple (Fig. 3). Le châssis 14 est ici formé de deux longerons 15 et 16, l'un avant et l'autre arrière, réunis par des ferrures 17 supportant le cadre du système d'attelage trois points pour le tracteur. Le longeron 15 amont dans le sens de la marche sert de support aux divers éléments d'une part ensemble cylindres 1, 2, 3 et 4 et d'autre part ensemble semeur 6. Dans l'exemple représenté, deux cadres rectangulaires 18-15-16, un pour deux rangs de semage, sont prévus; chacun est retenu à l'avant (aval) par une bride centrale 19 articulée sur le châssis en 13 et par une même bride 20 à l'arrière; le cadre 18 porte à l'avant un rouleau tasseur 1 et de l'avant vers l'arrière, un rouleau dérouleur 2. Sur le cadre, une ferrure 21 est montée légèrement en arrière du cylindre dérouleur 2, munie d'une lumière verticale 22 destinée à porter le rouleau porte bobine de film 34. Le ou les rouleaux 1 est muni de joues d'extrémité 23 légèrement concaves de diamètre un peu supérieur au rouleau pour déliminer les sillons dans lesquels les bords du film seront enterrés, avec en avant desdites joues une rasette 24 réglable de formation des sillons. Les rouleaux tasseur et dérouleur sont montés par leurs bouts d'arbre respectifs montés dans des chaises prévues sur le cadre. La bride 20 à l'arrière du cadre est équipée d'une manivelle 25 avec ressort permettant la descente ou la remontée du cadre pour donner au film une tension correcte sur le sol. L'arbre 3' sur lequel est engagée la bobine de film a ses extrémités guidées dans la lumière verticale 22 de sorte que le rouleau de film ne peut se déplacer en se déroulant que de haut en bas ou vice versa. Sur les bouts d'arbre du rouleau tasseur 1 sont articulés deux bras 28 dont l'extrémité libre agit par l'intermédiaire d'un ressort 26' sur une plaque 26 incurvée en arc de cercle épousant parfaitement environ au moins le quadrant avant supérieur du rouleau 2; cette plaquette 26 est ainsi bien appliquée contre le film qui se déroule depuis le rouleau 3, ce qui évite toute prise au vent du film par ailleurs bien tendu par la pression réglée par les ressorts de plaquette et par la pression sur le sol réglée par la manivelle 25. En arrière des porte film et dérouleur, le cadre porte un dispositif coupe-film 4 constitué en forme de cadre rectangulaire 27, de préférence de tubes métalliques, dont le côté supérieur est articulé en son milieu sur la tête du piston d'un vérin 4' dont l'autre extrémité est fixée sur le châssis et dont le côté inférieur est fendu pour recevoir l'organe de coupe (scie ou lame coupante); les côtés verticaux du cadre 27 sont articulés sur des bras 28 dont l'autre extrémité est montée à pivotement sur les bouts d'arbre du rouleau dérouleur 2. Un bon guidage de l'organe de coupe est ainsi assuré quand le vérin 4' est actionné pour relever ou abaisser la scie 4"; un ressort 28' interposé entre le corps du vérin et sa fixation au châssis permet l'escamotage de la scie lorsque celle-ci rencontre un obstacle sur le sol, empêchant ainsi tout risque de déformation. Cette solidarisation articulée entre l'organe de coupe et le rouleau dérouleur-applicateur est avantageusement telle que la scie se trouve, pour les dimensions usuelles des rouleaux dérouleurs, à une dizaine de centimètres environ dudit rouleau. Cette disposition solidaire est complétée, également selon l'invention, par d'une part un grattoir 29 s'étendant sur toute la longueur du coupe film sur laquelle il est articulé par un bord, son autre bord reposant sur la partie "sans film" du rouleau dérouleur 2 (empêchant ainsi la terre et le film une fois coupé de remonter sur ce rouleau), et d'autre part un petit rouleau 30 monté à rotation libre autour de l'extrémité libre de deux bras 31 dont l'autre extrémité est fixée en deux points symétriques du bord portant la scie, de manière à venir s'appliquer et rouler sur la terre quand le coupe-film est abaissé sous l'action du vérin. Chaque extrémité de ce petit rouleau 30 porte, coaxialement, un déflecteur de terre 32.

A la partie arrière du châssis principal est disposée une roue plombeuse 33 pour chaque rang et suivie d'une rasette 34 de recouvrement des bords du film.

Sur le longeron arrière 16 du châssis principal est monté l'ensemble "semeuse " du semoir, c'est-à-dire les roues 9 à godets - picots, les trémies 36 contenant les graines avec leurs distributeurs 7 dans les roues et leurs organes d'entraînement et de réglage. Pour rendre le semoir plus maniable, notamment dans les manoeuvres, en fin et début de rang, particulièrement importantes dans le cas de l'invention pour le terrage mécanique des bouts de rang, l'ensemble semeur présente avantageusement les caractéristiques particulières suivantes dont on verra qu'elles allègent sensiblement la machine totale, sa facilité de construction et son prix.

Selon ces caractéristiques, la roue à picots godets 9 est constituée d'un cercle 105, contre la périphérie duquel sont fixées des trémies 106 ouvertes vers le centre du cercle, prolongées par une plaque triangulaire prolongeant vers l'extérieur le plan du cercle pour former la partie fixe du picot 104; sur le bord, non en contact avec le cercle, de chaque trémie est articulé, autour d'une charnière, le bec triangulaire creux de contour identique à celui de ladite plaque rectangulaire pour s'appliquer sur lui en position de fermeture du picot, un bras 102 étant fixé sur le bec et muni à son extrémité libre d'un galet 103; ce galet roule sur une came fixe 103' prévue dans la partie inférieure du montage, sensiblement concentrique au cercle 105 depuis un point légèrement en avant de la verticale du point de semage passant par le centre du cercle et s'étendant environ jusqu'à la fin d'un arc couvert par trois picots 104. En outre selon l'invention les parois des trémies 106 sont en contact pour éviter toute perte de graines amenées du distributeur 7. Celui-ci est disposé à l'intérieur du cercle de la roue construite avec trois rayons 107 reliés au moyeu sur l'axe d'entraînement; il est légèrement désaxé vers l'avant. Une telle disposition facilite l'accès au distributeur, notamment. La roue semeuse 9 est montée dans un cadre 35 portant des paliers pour l'arbre essieu de la roue. La partie avant du cadre est articulée sur le longeron 16 du châssis principal par l'intermédiaire de brides pour permettre de relever et d'abaisser les roues semeuses. Chaque support 37 de trémie 36 est muni d'une chaîne 38 reliée à un vérin 39 monté sur les ferrures 5 d'attache de la suspension trois points, ce qui permet de relever ou d'abaisser sur la terre l'ensemble semeur, indépendamment de l'ensemble cy-

lindre, dérouleur, coupe-film.

Suivant un mode préféré de réalisation de l'invention, d'une part chaque cadre de roue semeuse porte dans son prolongement axial une roue plombeuse 108 réglable en hauteur sous l'action d'une manivelle 109, dans une fourche à glissière. D'autre part, les roues semeuses 9 sont entraînées à partir d'une seule roue motrice 110, montée à l'extrémité arrière d'une barre 111 dont l'autre extrémité est fixée sur le longeron 16 du châssis principal au milieu de celui-ci et équidistante des deux roues semeuses "intérieures"; la roue motrice entraîne par pignons 112 et chaînes 113 des pignons 119 montés sur l'arbre de chacune des deux roues intérieures les autres extrémités des arbres respectifs de ces roues entraînant par cardans 114 les deux roues semeuses extérieures. D'une manière plus générale, la roue motrice unique est montée au milieu de l'ensemble semeur et entraîne directement les deux roues intérieures semeuses les plus voisines d'elles, chaque distributeur étant entraîné synchrone avec sa roue.

On notera enfin que la roue motrice 110 unique à l'arrière joue aussi le rôle de stabilisateur du semoir grâce à la poussée du troisième point de l'attelage sur un balancier à ressort exerçant une certaine pression sur ladite roue motrice en combinaison avec les rouleaux avant. Lorsque les roues à picots sont relevées, la roue arrière, en appui sur le sol, facilite le transport du semoir d'un champ à un autre.

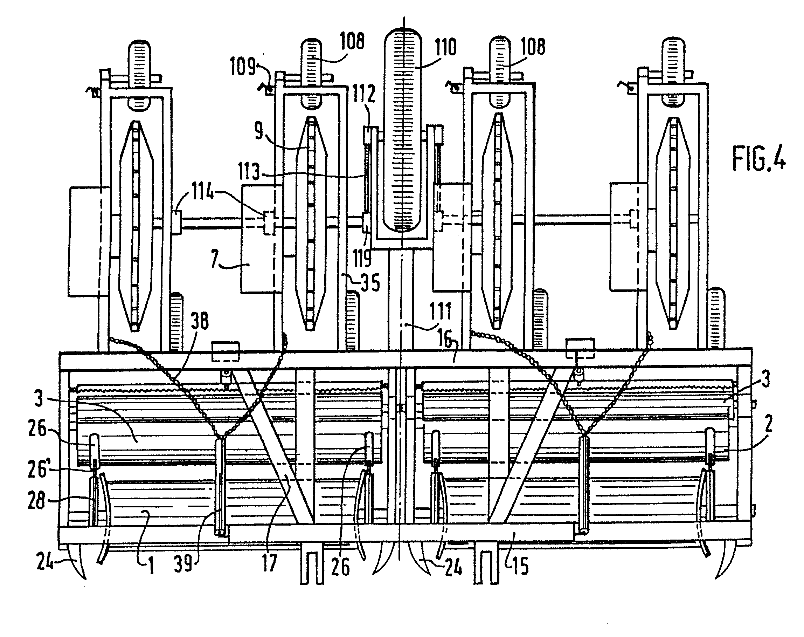

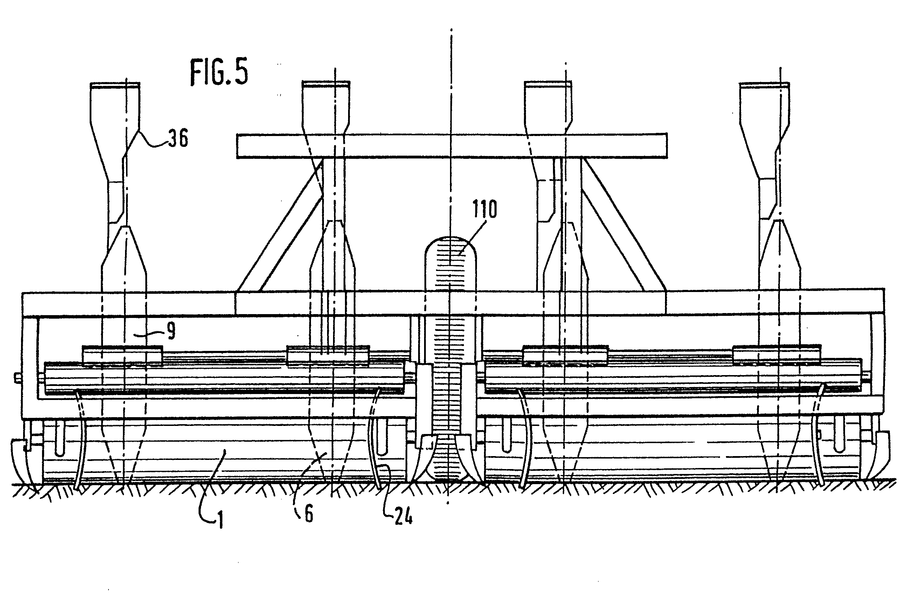

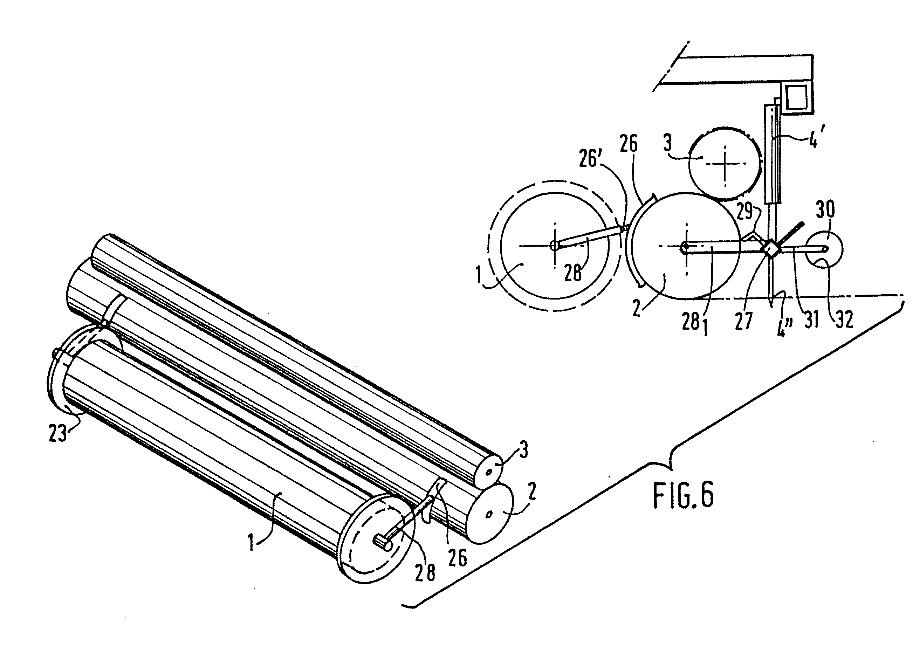

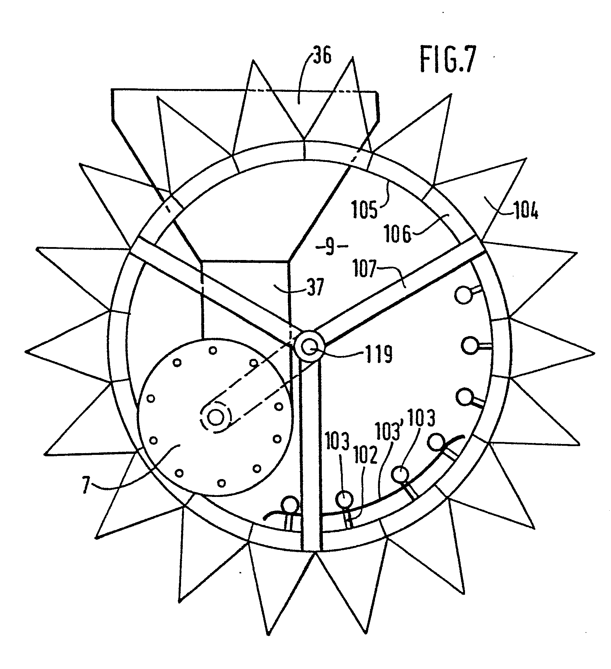

Le fonctionnement du semoir pour le terrage en bout de rang est le suivant (Fig. 3 à 7) : lorsque le semoir arrive en fin d'un rang ensemencé, l'opérateur commande à partir de sa place simultanément le relevage de l'ensemble semeur 6 (avec ses roues semeuses et plombeuses) par action du vérin des ferrures du système d'attache agissant sur les chaînes de trémies et simultanément le vérin 4 du coupe film 4' dont la scie 4" guidée par les bras 28 du dérouleur 3 descend de quelques centimètres et coupe le film. L'opérateur relève l'ensemble de la machine par la suspension trois points, et la fait avancer d'environ 50 centimètres. Il est préférable de placer à vue de l'opérateur, un cadran indiquant la longueur prévue pour un tel déplacement du semoir dans un sens ou dans d'autre. En gardant l'ensemble semeur 6 relevé, l'opérateur fait descendre l'ensemble 1,2,3,4 et recule le semoir d'environ 50 centimètres; ce déplacement a pour effet que la scie 4' et le petit rouleau 30 avec ses déflecteurs 32 ramènent la terre, précédemment retenue par le racleur grattoir 29 (qui empêche aussi le film de remonter sur le dérouleur après avoir été coupé) sur le sol où elle est poussée sur une petite longueur de la fin du paillage. Ceci fait, l'opérateur relève les ensembles (1, 2, 3, 4) et 6 pour faire le demi-tour nécessaire pour se placer en ligne devant le rang suivant à pailler et à ensemencer. Le procédé de terrage "en bout de rang" selon l'invention se poursuit alors "symétriquement" à la phase précédente : l'opérateur fait descendre l'ensemble (1,2,3,4) de sorte que les rouleaux reposent sur le sol et que la scie 4" pénètre dans la terre; il fait avancer le semoir de 50 centimètres environ de sorte que la partie libre du film coupé (qui constitue le début du paillage à réaliser sur le nouveau rang) qui, grâce aux plaquettes 26 de maintien, s'était réenroulé sur le dérouleur et éventuellement sur la bobine, est correctement appliqué sur le sol, avec simultanément un recouvrement convenable de l'extrémité du paillage à faire, par la terre poussée dans le déplacement. L'opérateur n'a plus alors qu'à rabaisser l'ensemble semeur 6 et simultanément la scie 4' se relève et à traiter le nouveau rang.

Les procédés et dispositifs selon l'invention sont donc bien adaptés au problème du terrage en bout de rang des semoirs sous paillage. En particulier, les roues allégées améliorent la qualité et la rapidité des manoeuvres. D'une manière générale le procédé est adaptable aux semoirs connus, notamment à ceux à alimentation par le fond ouvert des godets. Les prix de fabrication et d'utilisation, la facilité d'accès des éléments, sont très améliorés.

REVENDICATIONS

1. Procédé de terrage en bout de rang du film d'un semoir sous paillage comportant des cylindres tasseurs, porte-film, dérouleur et applicateur de film, un organe coupe-film, des éléments semeurs à godets picots et des trémies d'alimentation des distributeurs de graines, ce procédé étant caractérisé en ce que l'on assure un contact étroit du film sur la périphérie aval du dérouleur, que l'on empêche le film et la terre de remonter sur la périphérie amont du dérouleur, que l'on associe l'organe de coupe rectiligne avec des moyens de retenue et d'étalage de la terre, que l'on règle la commande de l'organe de coupe de manière à lui permettre de venir en contact étroit avec la terre, que l'on coordonne pour certains déplacements du semoir, la position basse de l'organe de coupe avec la position haute des éléments semeurs pendant des déplacements de courte longueur en fin de rang, vers l'aval ou vers l'avant, de telle manière que la terre poussée par l'organe de coupe et les moyens d'étendage et de retenue associés à cet organe de coupe amènent la terre sur une longueur de l'extrémité du film constituant le début ou la fin d'un rang.

2. Dispositif dérouleur coupe-film pour semoirs à grains sous paillage, comportant des roues semeuses, de préférence à perforateurs de film, avec des moyens pour dérouler le film et le couper en bout de rang, caractérisé par le fait que, sur le châssis de la machine sont montés d'une part un cylindre (3) portant le rouleau du film (10) à dérouler, d'autre part un cylindre pratiquement tangent à l'une des génératrices inférieures du cylindre porte-film et appliquant ledit film sur le sol en agissant comme rouleau applicateur (2) et enfin que ce cylindre (2) porte à chaque extrémité de son axe un bras (4) pivotant autour de celui-ci, une lame de scie (5) étant disposée à articulation autour des secondes extrémités des bras, des moyens tels qu'un vérin (7) articulé en un point à peu près médian (6) de la scie est porté par le châssis (1) de manière à maintenir la scie éloignée du film ou l'appliquer contre le film pour la coupe, avec un moyen élastique tel qu'un ressort à boudins (8) agissant sur les moyens vérin pour éviter l'effet d'obstacles sur la régularité de la coupe, des moyens agissant en tout cas pendant la coupe empêchant le film de flotter librement.

3. Dispositif selon la revendication 2 caractérisé en ce que les moyens pneumatiques (11-12) sont des buses alimentées en air soufflé par un ventilateur porté par le châssis et qui peut être soit le ventilateur de distribution des graines soit un ventilateur indépendant.

4. Dispositif pour la mise en oeuvre du procédé selon la revendication 1, caractérisé en ce que le rouleau dérouleur (2) a une grande partie de sa périphérie aval en contact très proche avec une plaque (26) concentrique à lui et maintenue élastiquement par deux bras d'extrémité pivotés sur les bouts d'arbre (1') du cylindre tasseur, que l'organe de coupe (4) est en forme de cadre rectangulaire (27) dont le côté inférieur porte la lame de coupe (4") et que le milieu du côté supérieur est actionné par un vérin (4') dont le corps est élastiquement (28') fixé au châssis du semoir, que des bras (28) sont articulés à une extrémité de l'arbre du dérouleur (2) et à l'autre extrémité sur la lame de coupe, qu'un rouleau (30) est monté fou entre les extrémités de deux bras (31) par ailleurs fixés à l'organe de coupe pour descendre avec lui, que ce rouleau (30) est muni à chacune de ses extrémités de déflecteurs (32), que le tableau de bord du semoir comporte une commande pour relever ou abaisser simultanément ou non les éléments semeurs et/ou les éléments tasseurs, dérouleurs et système de coupe, ainsi que des moyens pour imprimer au semoir des courts déplacements en avant et en arrière.

5. Dispositif selon l'une des revendications 2 à 4, caractérisé en ce que l'ensemble semeur comporte des roues semeuses (9) montées à rotation dans un cadre support (35) dont la partie avant est articulée sur la partie arrière (16) du châssis principal, que dans le prolongement de chaque cadre (35) est montée une roue plombeuse (108) réglable en hauteur, qu'une roue motrice unique est portée à l'extrémité arrière d'une barre (111) fixée par l'avant sur l'arrière du châssis au milieu de cet arrière, que cette roue motrice porte deux pignons (112) sur lesquels tourne une chaîne (113) passant d'autre part sur un pignon calé (119) sur l'arbre respectivement de l'une et l'autre desdites roues semeuses intérieures, que ces deux roues intérieures entraînent par cardans (114) les deux roues semeuses extérieures, que le cadre de chaque roue semeuse porte une trémie (36) envoyant des graines dans un distributeur (7) logé à l'intérieur de la roue semeuse et entraîné synchroniquement avec la roue semeuse à partir de l'arbre de celle-ci, que chaque trémie (36) est reliée par une chaîne à un vérin (39) du châssis principal pour le relevage et la descente de l'ensemble des roues semeuses, que le dispositif de coupe peut être actionné simultanément ou non avec le basculement des roues semeuses.

6. Dispositif selon la revendication 5 caractérisé en ce que la roue semeuse (9) est formée par un cercle (105) avec trois rayons (107), les godets picots (104) ayant des trémies (106) au contact par leurs parois et les picots ayant leur partie mobile porteuse d'un bras (102) à galets (103) de roulement sur une came (103') fixe pour ouvrir les picots un peu avant le point de semage et les refermer à la fin d'un arc couvrant trois picots.

7. Semoirs sous paillage équipés selon l'une ou plusieurs des revendications 1 à 6.

FIG.1

FIG.2

FIG. 3

FIG.4

FIG.5

36

110

24

6

9

1

FIG.6

5/6

0172077

0172077

FIG.7

# RAPPORT DE RECHERCHE EUROPEENNE

## DOCUMENTS CONSIDERES COMME PERTINENTS

| Catégorie | Citation du document avec indication. en cas de besoin. des parties pertinentes | Revendication concernee | CLASSEMENT DE LA DEMANDE (Int Cl 4) |
|---|---|---|---|
| A | EP-A-0 133 134 (LEGOFF)<br><br>* Pages 6-12; figures 1-6 * | 1,2,5,6 | A 01 G 13/02<br>A 01 C 7/08 |
| A | FR-A-2 483 380 (BRIERE)<br>* Page 2, ligne 31 - page 4, fin; figure 1 * | 1,2,4 | |
| A | US-A-3 234 691 (COWELL)<br>* Colonne 2, lignes 17-72; colonne 3; colonne 4 et colonne 5, lignes 1-7; figures 1-8 * | 1,2,4 | |
| A | FR-A-2 458 212 (MORTIER)<br>* Pages 4-8; figures 1-6 * | 1,5,6 | |

DOMAINES TECHNIQUES RECHERCHES (Int. Cl 4)

A 01 G
A 01 C

Le présent rapport de recherche a été établi pour toutes les revendications

| Lieu de la recherche | Date d'achèvement de la recherche | Examinateur |
|---|---|---|
| LA HAYE | 24-10-1985 | VERMANDER R.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82